# EUROPEAN PATENT APPLICATION

(11) **EP 3 399 010 A1**
(43) Date of publication of application: **07.11.2018**
(21) Application number: 16882206.2
(22) Date of filing: 10.05.2016
(51) Int. Cl.: C10L 11/06, B27M 1/08

(54) **SLOW-BURNING LOG**

(30) Priority: 29.12.2015 UA 201513009
(71) Applicant: Ilin, Viktor Eduardovych, Kyiv 04212 (UA)
(72) Inventor: ILIN, Viktor Eduardovych, Kyiv 04212 (UA); BAKHCHYDZHY, Sergii Vasylovych, Kyiv 03148 (UA)
(74) Representative: Straube, Urs Norman
(86) International application number: PCT/UA2016/000056
(87) International publication number: WO 2017/116378

(57) **Abstract**

The invention relates to warming, heating, lighting devices, which represent a source of long-term stand-alone fire that can be utilized for using in fireplaces; in the field, in campings and in rest outside the city, in any touristic or other events. A slow-burning log is made of a solid-fuel material of a vegetable origin, the log having front, rear and side surfaces, through incisions, which are opened at the top of the side surface and which extend from the front surface to the rear one and, when penetrating into the log body, move apart at an angle with respect to each other and terminate in the log body. There are at least two through incisions made, at least two middle recesses, which intersect between each other at the top and intersect longitudinal incisions, are made at the top of the side surface, furthermore, the log has at least two longitudinal incisions at the bottom of the side surface, one of them begins at the bottom of the front surface in the middle section thereof, and another one - at the bottom of the rear surface in the middle section thereof, and which terminate in the log body in the region between the through incisions. At least two through incisions are made completely separated from each other by the log body. The middle recesses begin from the top section of the side surface and couple with the through incisions at a distance from the log center thereby forming a combined air channel with them, the channel having entrances for air on the front and rear surfaces and in the midsection of the side surface of the log. The longitudinal incisions are made vertically or concentrically, one of them extends from the front surface towards the rear one, while another extends from the rear surface towards the front one, and they are not coupled with each other. The log has an ignition agent that is arranged in at least one of the through incisions and/or in at least one middle recess, the log is made with a handle, with a flat surface at the bottom along the entire length. The technical effect lies in increase of the burning time of the device thereby providing uniform burning of the log along the entire length, elimination of breakage of the device into parts during burning with complete combustion of the device and, thus, provision of complete combustion.

## Description

The invention relates to warming, heating, lighting devices, which represent a source of long-term stand-alone fire that can be utilized for using in fireplaces; in the field, in campings and in rest outside the city, in any touristic or other events.

A shaped fuel is known, the fuel comprising a chunk of wood or other organic inflammable material with axial cavity, an ignition cartridge with igniter cord disposed in the cavity and air channels connecting the axial cavity with outer surface of the chunk and which are made in the form of sector-forming vertical radial cuts not reaching chunk basis by at least half height thereof. And the axial cavity is arranged along the vertical axis of the chunk passing through any point of circle located on horizontal end plane of the chunk with the center lying on the vertical axis passing through center of gravity of the chunk and radius being equal to one third of maximum distance from center of this circle to the outer surface of the chunk that is provided with a mesh on the bottom of the axial cavity [see patent RU 2078795(C1), IPC6 C10L11/06, C10L5/36, published on 10.05.1997].

A drawback of the shaped fuel lies in reduction of its efficiency when using in horizontal position, since in this position the known device is characterized by non-uniformity of combustion due to delivery of a large air volume to the burning zone through the through-cuts and as a result rapid breakage of the device into parts.

Furthermore, drawbacks of said technical solution lie in rapid combustion of separate surfaces of the chunk due to rapid distribution of fire onto the outer surface of the device through the through-cuts, accelerated deformation thereof and incomplete combustion of the device: incomplete combustion of the lower base thereof when the chunk is arranged both in horizontal and vertical positions, incomplete combustion of parts of the chunk after breakage thereof that leads to reduction of combustion time and, thus, usage time thereof.

The closest analogue of the proposed technical solution is a log with burning channels that is made of a solid-fuel material of a vegetable origin, the log having side, front and rear surfaces, flat surface at the bottom that is provided along the entire length of the log, two through incisions having an extension provided in a midsection in the region of the through incisions, which are made opened at the top of the side surface and extend from the front surface to the rear one and, when penetrating into the body, move apart at an angle with respect to each other and terminate in the log body [see patent US D713954 S, class ICID 23-03, of 23.09.2014; also revealed from the Internet on 15.12.2015 http://www.5starlogs.com/product/a-log/].

A drawback of the known device lies in rapid combustion of the midsection of the log due to a presence of an extension in the midsection at the top of the log, wherein the extension in the midsection in the region of the through incisions prevents uniform distribution of air along the through incisions, opens free access for the large air volume to the ignition zone of the log that leads to rapid combustion of the midsection that, in turns, leads to breakage of the device and, thus, to incomplete combustion and reduction of the operation time thereby reducing efficiency thereof.

At this time, under accelerated deformation thereof due to intensive combustion of the midsection, the log breaks down into parts, which contain front and rear surfaces being incompletely combusted, namely without complete combustion of the bottom section of the log ends. In other words, the log breaks down into large parts, which are not combusted and which together compose at least third part of the log body that significantly reduces the burning time and, as a consequence, leads to rapid withdrawal of the device from operation.
A technical problem to be solved by the proposed invention lies in how to provide a novel device serving as a source of stand-alone environmentally-friendly fire providing effective, uniform and long-term burning.

Said technical problem is solved due to the fact that in the slow-burning log made of a solid-fuel material of a vegetable origin, the log having front, rear and side surfaces, through incisions, which are opened at the top of the side surface and which extend from the front surface to the rear one and, when penetrating into the log body, move apart at an angle with respect to each other and terminate in the log body, according to the invention, there are at least two through incisions made, at least two middle recesses, which intersect between each other at the top and intersect longitudinal incisions, are made at the top of the side surface, besides, the log has at least two longitudinal incisions at the bottom of the side surface, one of them begins at the bottom of the front surface in the middle section thereof, and another one - at the bottom of the rear surface in the middle section thereof, and which terminate in the log body in the region between the through incisions.

Also according to the invention, at least two through incisions are made completely separated from each other by the log body.

Also according to the invention, at least two middle recesses, which intersect between each other at the top of the log and intersect with the through incisions, are made in the middle on the side surface in the top section. The middle recesses begin from the top section of the side surface and couple with the through incisions at a distance from the log center thereby forming a combined air channel with them, the channel having entrances for air on the front and rear surfaces and in the midsection of the side surface of the log. Also according to the invention, the longitudinal incisions are made vertically or concentrically if several longitudinal incisions are present in the front and rear sections.
Also according to the invention, one of at least two longitudinal incisions extends from the front surface towards the rear one, while another extends from the rear surface towards the front one.

Also according to the invention, the longitudinal incisions are not coupled between each other.

Also according to the invention, the slow-burning log may comprise an ignition agent mounted in at least one through incision and/or middle recess.

Also according to the invention, walls of the through incisions and middle recesses may be soaked with a highly flammable substance.

Also according to the invention, the proposed device may have a handle for convenient transportation thereof, the handle being fixed thereon and may be arranged on the front or rear surface or on the side surface of the log.

Also according to the invention, the proposed device may have a flat surface for stability, the surface made at the bottom along the entire length from the front surface to the rear surface.

The proposed device is produced from the solid-fuel material of a vegetable origin, preferably from natural dry timber, and it may be in the form of a sawed-off tree trunk portion arranged horizontally.

The set of said essential features of the proposed technical solution allows achievement of the technical effect that lies in increase of the burning time of the device providing uniform burning of the log along the entire length, preventing breakage of the device into parts during burning with complete combustion of the device and, thus, providing complete combustion.

In the device, a system for air supply to the burning zone is improved due to making through incisions completely separated from each other by the log body, elimination of extension in the midsection in the region of through incisions, presence of additional longitudinal incisions, which are, in contrast to the closest analogue, not coupled between each other and which are made at the bottom from the ends of the log, thereby providing air delivery from the bottom bypassing the midsection of the log, providing stable combustion temperature and uniform complete combustion of all log sections from top to bottom without breakage thereof.

Cause-and-effect relationship between essential features of the technical solution and technical effect lies in the following.

Due to making middle recesses at the top of the side surface of the log, the recesses intersect between each other at the top of the log and intersect the through incisions at a distance from the center of the log thereby forming combined air channels with air entrances on the front and rear surfaces and in the midsection of the side surface of the log, air supply distribution from the front, rear and side surfaces of the log is provided that allows uniformity of gas exchange with air delivery from said sides during burning. By making the air channels of such a structure, uniform ignition of the log along the perimeter of the through incisions is provided. By making at least two through incisions completely separated from each other by the log body, uniform burning of the log with elimination of premature combustion of the log from the top is provided that provides increase of the burning time of the log.

Also, by making the longitudinal incisions vertically in the region between the through incisions and such that one of the incisions extends from the front surface towards the rear one, and another extends from the rear surface towards the front one, without being coupled between each other, effective air delivery from the bottom of the log is provided thereby allowing gas exchange at the ends of the log and uniform, moderate burning thereof and combustion together with the midsection of the log eliminating brakeage thereof, as well as significant elongation of the burning time and, thus, of the usage time.
During ignition of the log, the longitudinal incisions made at the bottom being arranged in the region between the through incisions made at the top provide supply of air that is delivered therein to the through incisions from the front and rear surfaces. By making the longitudinal incisions extending from the front and from the rear surfaces without being coupled between each other, a barrier that serves as a blocker for through air flow in the lower section of the device is formed in the middle at least lower section of the log. At the same time, it provides inflow air movement in the lower section of the longitudinal incisions and outflow air movement in the upper section thereof, thereby air that outflows from the longitudinal incisions gets the through incisions as affected by stack effect that is created due to temperature difference of air in the through and longitudinal incisions, and uniform combustion of the end and middle sections of the log is provided. Furthermore, the barrier in the lower section of the log and making the log with elimination of the extension in the central section provides increase of the burning time of the midsection and of the entire log, non-breakage of the device into longitudinal parts during burning.

After ignition of the log and directly during burning thereof, the region between the through recesses is combusted that leads to combining the perimeter of the through recesses with the perimeter of the longitudinal incisions thereby forming a single air channel along the entire length of the log that serves, at the same time, as the burning zone. Forming of the single air channel provides air supply to the burning zone from the front and rear surfaces that provides gas exchange also maintaining burning and leads to complete combustion of the device: of the log sections with the front and rear surfaces, which are gradually combusted with the upper, middle and lower sections of the log without breakage into parts. Non-breakage of the log into parts during burning increases the burning time thereof and uniformity of flame distribution along the entire perimeter of the device.

Presence of the ignition agent mounted in at least one through incision and/or middle recess, or soaking with the highly flammable substance, allows ease, rapid and uniform ignition of the device thereby assisting in uniform burning as well as increasing usability.

By making the log with a flat surface made at the bottom along the entire length, stability of the log during usage and uniformity of air delivery from all sides and in all planes, according to the structural concept, are provided, that in the set of essential features provides uniformity of the log combustion and increase of the burning duration with elimination of accelerated combustion of separate sections and with elimination of the log breakage.

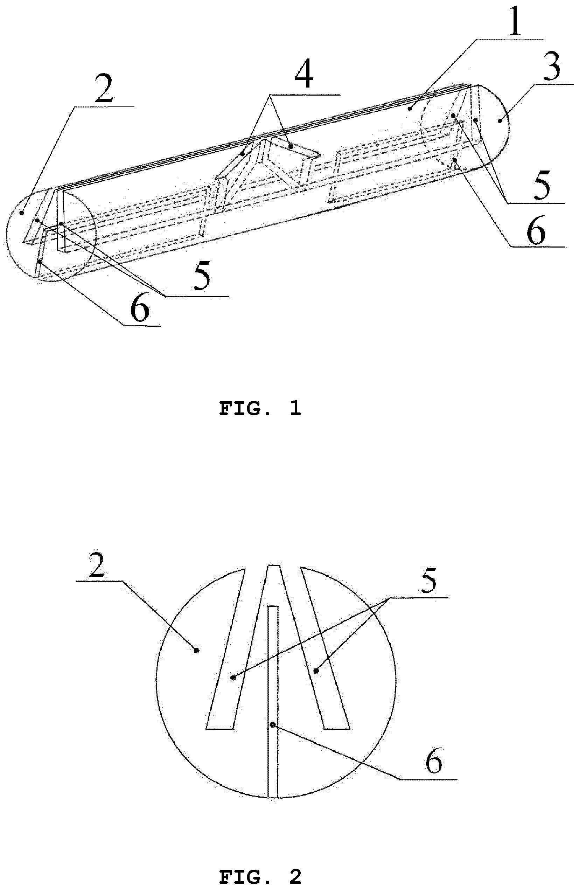

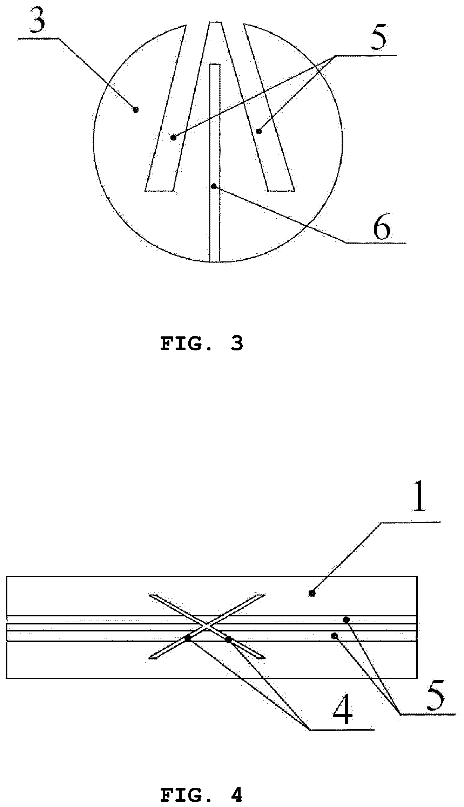

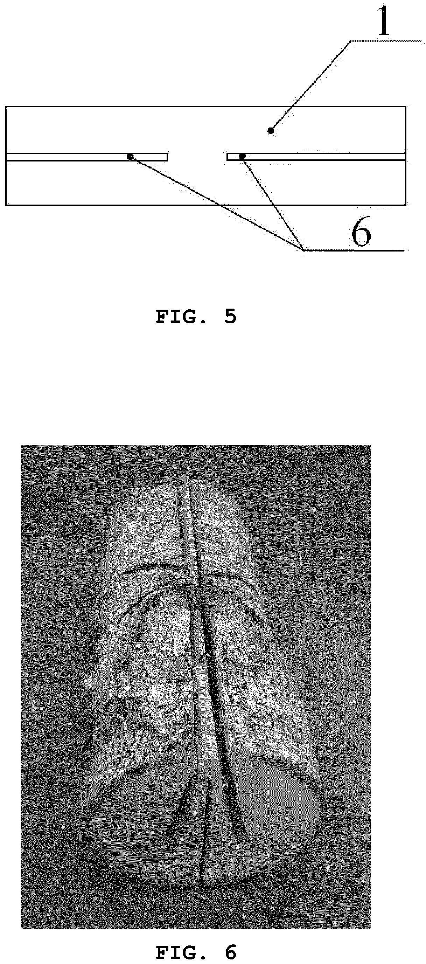

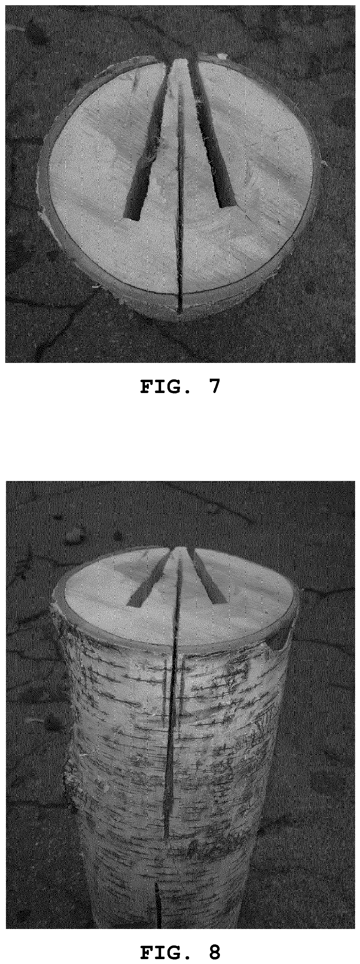

The essence of the claimed technical solution will be explained below referring to the illustrative material, which presents: fig. 1 - an overall view of the slow-burning log; fig. 2 - a front view of the slow-burning log; fig. 3 - a rear view of the slow-burning log; fig. 4 - a top view of the slow-burning log; fig. 5 - a bottom view of the slow-burning log; figs. 6, 7, 8 - examples of embodiments of the slow-burning log: fig. 6 - an overall top view, fig. 7 - a front view, fig. 8 - a fragment of the overall bottom view.

The proposed slow-burning log in one of possible embodiments that is not exclusive includes: a side surface 1; a front surface 2; a rear surface 3; middle recesses 4, which intersect with through incisions 5; longitudinal incisions 6, which begin on the front surface 2 and on the rear surface 3.

The through incisions 5, which are made along the entire length of the side surface 1 and extend from the front surface 2 to the rear surface 3, penetrate into the log body at an angle with respect to each other, symmetrically moving apart in different directions at the top form the central section of the log, and terminate in the log body.

The middle recesses 4, if there are two of them made, intersect between each other at the top in the middle section of the log such that the region of their intersection is arranged in the region of the through incisions 5. When the log is made with three or more middle recesses 4, they are distributed uniformly. The middle recesses 4 are made vertically and, when penetrating into the log body, may reach the lower section of the through incisions 5, couple with them thereby forming general air channels, which are coupled between each other, with entrances on the front, rear and side surfaces.

At least two longitudinal incisions 6 are made at the bottom of the log on the side surface 1, one of the incisions begins at the bottom in the middle section of the front surface 2 and terminates on the front surface in the region between the through incisions 5, while another one begins at the bottom in the midsection of the rear surface 3 and terminates in the region between the through incisions 5. The longitudinal incisions 6 are made horizontally, preferably there are two of them, each one on the front surface 2 and on the rear surface 3 respectively. If the log is made with more longitudinal incisions 6, they are preferably made in pairs on the front surface 2 and on the rear surface 3 respectively. The longitudinal incisions 6 are made preferably vertically. The longitudinal incisions 6, when extending from the front surface 2 towards the rear surface 3 but without reaching it, and from the rear surface 3 towards the front surface 2 without reaching it, are not coupled between each other.

The slow-burning log is preferably used in fireplaces, barbecues in any touristic events and in rest outside the city, in campings as a source of long-term stand-alone fire for warming, cooking or as a light source in the following way.
The slow-burning log is arranged horizontally on the lower flat surface thereof, wherein the middle recesses 4 and through incisions 5 are arranged at the top. The ignition agent arranged in the through incisions 5 or in the middle incisions 6 or a wick of this agent extending there from is scorched. Afterwards, gradual uniform slow inflammation of the slow-burning log occurs.

Air is delivered through the middle recesses 4 arranged in the midsection of the side surface 1 directly to the through incisions 5, while the air increases intensity of gas exchange in the burning zone and enables uniform ignition of the log with gradual distribution of flame along the through incisions 5 along their entire length that provides uniform burning of the log.

Furthermore, at the beginning of ignition of the device, air being delivered to the longitudinal incisions 6 and at the same time being flew out there from is delivered to the through incisions 5 due to stack effect that is created due to temperature difference of the air in the through incisions 5 and longitudinal incisions 6.

During burning of the device, the region between the through incisions 5 is combusted resulting in that the perimeter of the through incisions 5 is combined with the perimeter of the longitudinal incisions 6 thereby forming general through air channel along the entire length of the log. Afterwards, the flame is distributed to the lower section of the log that provides gradual combustion of the front and rear surfaces and, thus, ends of the log gradually with the midsection from top to bottom as well as non-breakage of the device till the end of the burning time.

The region of the flame distribution displaces uniformly and slowly from its upper section to the lower one along the entire length of the log until the final combustion of the log occurs.

Preferably, the slow-burning log is made from timber. Various wood species are used, preferably, birch.

It has been experimentally established that making the middle recesses, according to the claimed structural solution being proposed, leads to uniform distribution of the flame zone in the through incisions, since such structure allows provision of the air supply distribution, in contrast to the extension of the burning channels as made in the closest analogue as well as provides uniform distribution of the air in the through incisions that is delivered through the middle recesses.

Also as a result of the experimental study it has been established that the longitudinal incisions provide non-breakage of the log into parts during burning and complete combustion thereof, including lower section and ends thereof, due to extension of the burning zone and formation of the general through air channel. Extension of the burning zone opens free access for the fire to the additional fuel volume that is contained in the lower section of the log along the entire length thereof thereby increasing the burning time of the device and, thus, usage time.

Upon comparison of the proposed technical solution with the analogues known from the prior art, it is concluded that the slow-burning log meets the criterion of "inventive step", since it is presented with qualitative structural changes of making the incisions and recesses thereby producing an improved uniformly distributed ventilation system with associated structurally effectively functioning airflows for supplying air to the burning zone that provides achievement of said technical effect being not established in the existing prior art earlier.

Structures of the slow-burning log having the claimed set of essential features have not been revealed from existing sources of patent and scientific and technical information, thus, the presented technical solution meets the criterion of "novelty".

Also, the proposed technical solution is suitable for use, since it does not require development of super complex equipment and it is reproducible using known technical means and materials, therefore, the present technical solution is considered to be compliant with the criterion of "industrial applicability".

## Claims

1. A slow-burning log made of a solid-fuel material of a vegetable origin, the log having front, rear and side surfaces, through incisions, which are opened at the top of the side surface and which extend from the front surface to the rear one and, when penetrating into the log body, move apart at an angle with respect to each other and terminate in the log body, **characterized in that** there are at least two through incisions made, at least two middle recesses, which intersect between each other at the top and intersect longitudinal incisions, are made at the top of the side surface, besides, the log has at least two longitudinal incisions at the bottom of the side surface, one of them begins at the bottom of the front surface in the middle section thereof, and another one - at the bottom of the rear surface in the middle section thereof, and which terminate in the log body in the region between the through incisions.

2. The slow-burning log according to claim 1, **characterized in that** at least two through incisions are made completely separated from each other by the log body.

3. The slow-burning log according to claim 1, **characterized in that** the middle recesses begin from the top section of the side surface and couple with the through incisions at a distance from the log center thereby forming a combined air channel with them, the channel having entrances for air on the front and rear surfaces and in the midsection of the side surface of the log.

4. The slow-burning log according to claim 1, **characterized in that** the longitudinal incisions are made vertically or concentrically.

5. The slow-burning log according to claim 1, **characterized in that** one of the longitudinal incisions extends from the front surface towards the rear one, while another extends from the rear surface towards the front one.

6. The slow-burning log according to claim 1, **characterized in that** the longitudinal incisions are not coupled between each other.

7. The slow-burning log according to claim 1, **characterized in that** an ignition agent is arranged in at least one of the through incisions and/or in at least one middle recess.

8. The slow-burning log according to claim 1, **characterized in that** it is made with a handle.

9. The slow-burning log according to claim 1, **characterized in that** it is made with a flat surface at the bottom along the entire length.
